Europäisches Patentamt

European Patent Office

Office européen des brevets

(19)

(11) Numéro de publication : **0 354 107 B1**

(12) **FASCICULE DE BREVET EUROPEEN**

(45) Date de publication du fascicule du brevet :
**02.09.92 Bulletin 92/36**

(51) Int. Cl.⁵ : **B64G 1/64,** B64G 9/00

(21) Numéro de dépôt : **89402159.1**

(22) Date de dépôt : **28.07.89**

(54) **Système de fixation permettant d'accoster rapidement une structure pour y être fixé de façon détachable.**

(30) Priorité : **05.08.88 FR 8810630**

(43) Date de publication de la demande :
**07.02.90 Bulletin 90/06**

(45) Mention de la délivrance du brevet :
**02.09.92 Bulletin 92/36**

(84) Etats contractants désignés :
**DE ES GB IT NL SE**

(56) Documents cités :
**GB-A- 820 224**
**US-A- 2 722 727**
**US-A- 4 185 811**
**US-A- 4 682 804**

(73) Titulaire : **AEROSPATIALE SOCIETE NATIONALE INDUSTRIELLE Société Anonyme dite:**
**37, Boulevard de Montmorency**
**F-75016 Paris (FR)**

(72) Inventeur : **Geyer, Freddy**
**15, rue Francis Mistral**
**F-6150 Cannes La Bocca (FR)**
Inventeur : **Libert, Paul**
**29, Le Hameau de Marras**
**F-83600 Les Adrets De L'Esterel (FR)**
Inventeur : **Henry, Jean Pierre**
**671, Chemin des Tuilières**
**F-06220 Vallauris (FR)**

(74) Mandataire : **Bonnetat, Christian**
**CABINET BONNETAT 23, Rue de Léningrad**
**F-75008 Paris (FR)**

EP 0 354 107 B1

Jouve, 18, rue Saint-Denis, 75001 PARIS

## Description

La présente invention concerne un système de fixation, permettant notamment d'accoster rapidement une structure dont la position et les dimensions sont peu précises, de fixer à ladite structure un élément lié audit système et de séparer ledit élément de ladite structure, dans des conditions et des ambiances difficiles, telles que celles qui sont imposées sous l'eau ou dans l'espace, notamment à l'extérieur des véhicules spatiaux.

L'invention est destinée à simplifier au maximum les manoeuvres à effectuer par un opérateur et à faciliter l'accostage de la structure, ainsi qu'à réduire au maximum l'énergie nécessaire au verrouillage et au déverrouillage dudit système sur la structure, tout en procurant un serrage important sans jeu, insensible aux variations de température et ne nécessitant aucune lubrification. Le système selon l'invention permet et assure un effort de serrage minimal, avec une manipulation de faible amplitude sur une structure dont les dimensions peuvent être sujettes à une grande dispersion. Par ailleurs, le système selon l'invention permet d'éliminer toute sensation d'efforts de manipulation pour l'opérateur, car il comporte des butées franches de fin de course matérialisant les différentes étapes de verrouillage sur la structure.

Ainsi, l'objet de la présente invention est un système de fixation permettant l'arrimage et la séparation d'un élément sur une structure avec un faible apport d'énergie de manipulation et sans repérage sensoriel des opérations, un effort de maintien élevé et connu, et un fonctionnement quasiment insensible aux variations de température, tout en ne nécessitant pas la lubrification des pièces en contact.

A cette fin, selon l'invention, le système de fixation, permettant notamment d'accoster rapidement une structure pour y être fixé de façon détachable, est remarquable en ce qu'il comporte :

– une pince spontanément ouvrable sous l'action d'un premier ressort ;

– une tige susceptible de coulisser sous l'action d'un second ressort pour fermer ladite pince à l'encontre de l'action dudit premier ressort ;

– un appui mobile pour ledit second ressort ;

– des moyens de verrouillage commandables pour le verrouillage de ladite tige coulissante et dudit appui mobile, pouvant occuper trois positions, à savoir :

. une première position pour laquelle ladite tige et ledit appui sont verrouillés et ledit second ressort est bandé ;

. une seconde position pour laquelle ladite tige est déverrouillée, mais ledit appui reste verrouillé ; et

. une troisième position pour laquelle ladite tige et ledit appui sont déverrouillés ;

– et des moyens à commande volontaire pour le blocage desdits moyens de verrouillage, pouvant également occuper trois positions, à savoir :

. une première position pour laquelle lesdits moyens de verrouillage sont bloqués dans leur première position ;

. une seconde position pour laquelle lesdits moyens de verrouillage peuvent passer de leur première à leur seconde position ; et

. une troisième position pour laquelle lesdits moyens de verrouillage peuvent passer de leur seconde à leur troisième position.

On voit ainsi que, dans le système de fixation de l'invention, l'énergie nécessaire pour obtenir l'effort élevé de verrouillage est stockée dans ledit second ressort et est libérée par actionnement desdits moyens de blocage et desdits moyens de verrouillage. Cet actionnement ne nécessite qu'une faible énergie de la part de l'opérateur et le séquencement des opérations à effectuer par celui-ci est déterminé mécaniquement par les positions respectives desdits moyens de blocage et desdits moyens de verrouillage. De telles positions sont définies par des butées mécaniques et elles sont prévues pour que la fin d'une opération prépare mécaniquement le début de la suivante. Ainsi, pour utiliser le système de fixation selon l'invention, il n'est pas indispensable d'en connaître la structure interne : seule la connaissance des opérations à effectuer est nécessaire. Comme il ressortira clairement de la suite, lesdites seconde et troisième positions des moyens de verrouillage correspondent respectivement à la fermeture et à l'ouverture de ladite pince.

De préférence, lesdits moyens de verrouillage comportent trois verrous mobiles les uns par rapport aux autres, l'un desdits verrous coopérant avec ladite tige mobile, tandis qu'un autre coopère avec ledit appui mobile et que le troisième sert à la commande des deux autres, des moyens de solidarisation en déplacement étant prévus entre lesdits verrous.

Lesdits moyens de blocage peuvent être formés par une goupille coopérant avec lesdits verrous, lesdites seconde et troisième positions desdits moyens de blocage étant déterminées par butée de ladite goupille contre ledit verrou servant à la commande des deux autres.

Dans ce cas, il est préférable que lesdits verrous soient montés rotatifs autour d'un axe commun et présentent la forme au moins approximative d'un secteur de cercle, ladite goupille coopérant avec la partie circulaire desdits verrous.

Ladite goupille peut présenter un diamètre en échelon et elle peut être montée coulissante parallèlement à l'axe de rotation desdits verrous.

Lesdits verrous coopérant respectivement avec ladite tige mobile et ledit appui mobile sont de préférence pourvus de lumières dans lesquelles peuvent pénétrer ladite tige et ledit appui mobile.

Dans un mode de réalisation avantageux, le sys-

2

tème conforme à l'invention comporte un corps creux formant cylindre et à l'intérieur duquel sont montés deux plateaux formant piston et respectivement solidaires de ladite tige et dudit appui mobile, ledit second ressort étant monté entre lesdits plateaux.

On prévoit avantageusement un système pour le marquage de position desdits moyens de blocage.

De préférence, lesdits verrous et lesdits moyens de solidarisation en déplacement desdits verrous sont prévus pour que la fermeture et l'ouverture de ladite pince soient obtenues par des déplacements inverses dudit troisième verrou de commande.

Afin que, après déverrouillage, le système de fixation selon l'invention puisse être réarmé en vue d'une utilisation ultérieure, on prévoit :

– que dans leur troisième position, lesdits moyens de blocage permettent auxdits moyens de verrouillage de passer de leur troisième à leur seconde position par action volontaire sur ledit appui mobile ;

– et que, dans leur seconde position, lesdits moyens de blocage permettent auxdits moyens de verrouillage de passer de leur seconde à leur première position par action volontaire sur ledit second ressort.

Les figures du dessin annexé feront bien comprendre comment l'invention peut être réalisée. Sur ces figures, des références identiques désignent des éléments semblables.

La figure 1 est une vue en coupe axiale du système conforme à la présente invention, en position armée.

La figure 2 est une vue de dessus correspondant à la figure 1.

La figure 3 est une vue en élévation, avec arrachement partiel, du système de la figure 1.

La figure 4 est une vue en plan du verrou de commande des moyens de verrouillage.

Les figures 5, 6 et 7 sont respectivement des vues de face, du dessus et du dessous du verrou coopérant avec ladite tige mobile.

Les figures 8 et 9 sont respectivement des vues du dessus et de face du verrou coopérant avec l'appui mobile.

La figure 10 illustre le système de marquage de position des moyens de blocage.

Les figures 11 et 12 sont des vues en coupe, respectivement selon les lignes XI-XI et XII-XII de la figure 1.

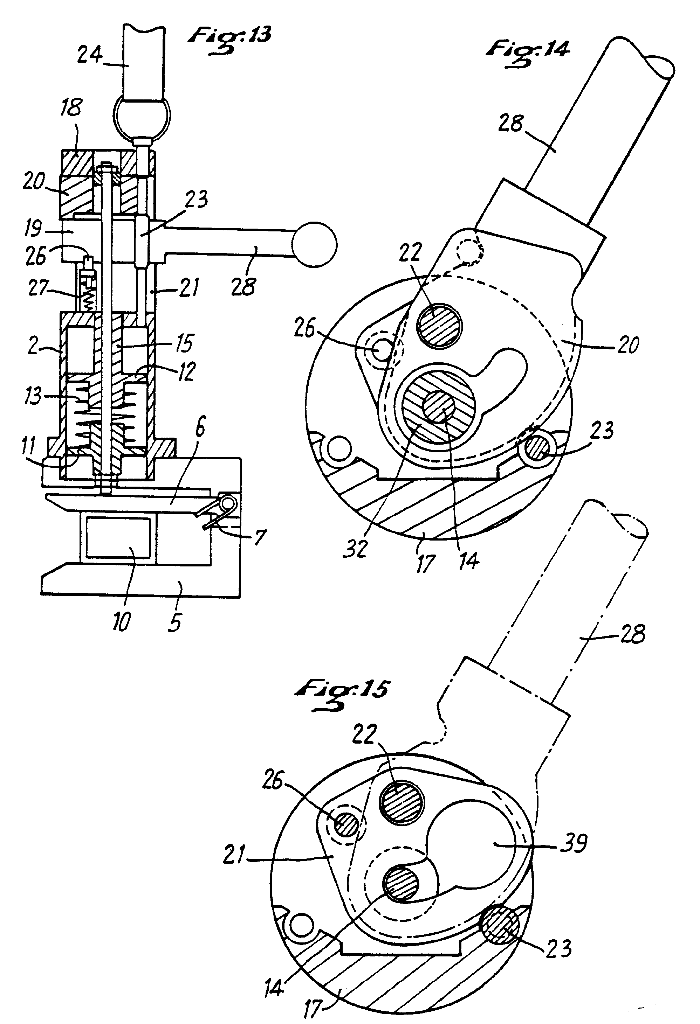

La figure 13 montre, en coupe axiale schématique, le système selon l'invention en prise sur une structure.

Les figures 14 et 15 sont respectivement des coupes selon les lignes XI-XI et XV-XV de la figure 1, lorsque le système selon l'invention se trouve dans la position de la figure 13.

La figure 16 montre, en coupe axiale schématique, le système selon l'invention en position de déverrouillage de la structure.

La figure 17 est une coupe selon la ligne XV-XV de la figure 1, lorsque le système selon l'invention se trouve dans la position de la figure 16.

La figure 18 illustre l'utilisation du système conforme à l'invention pour la fixation d'un équipement sur une structure.

La figure 19 montre en coupe axiale un outillage facilitant le réarmement du système selon l'invention.

La figure 20 est une coupe selon la ligne XX-XX de la figure 19.

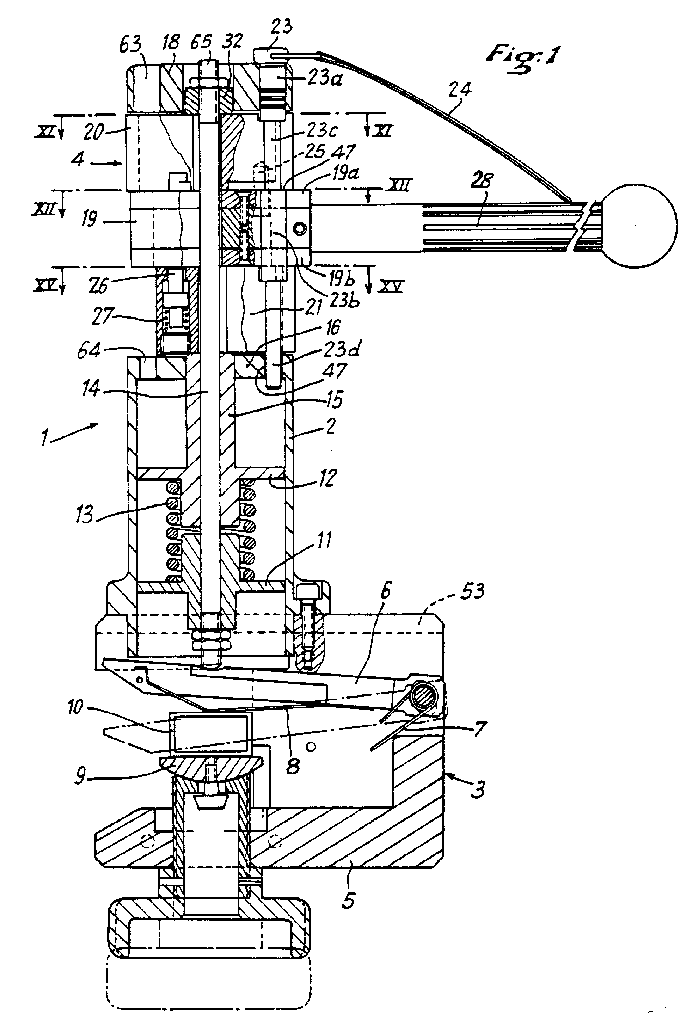

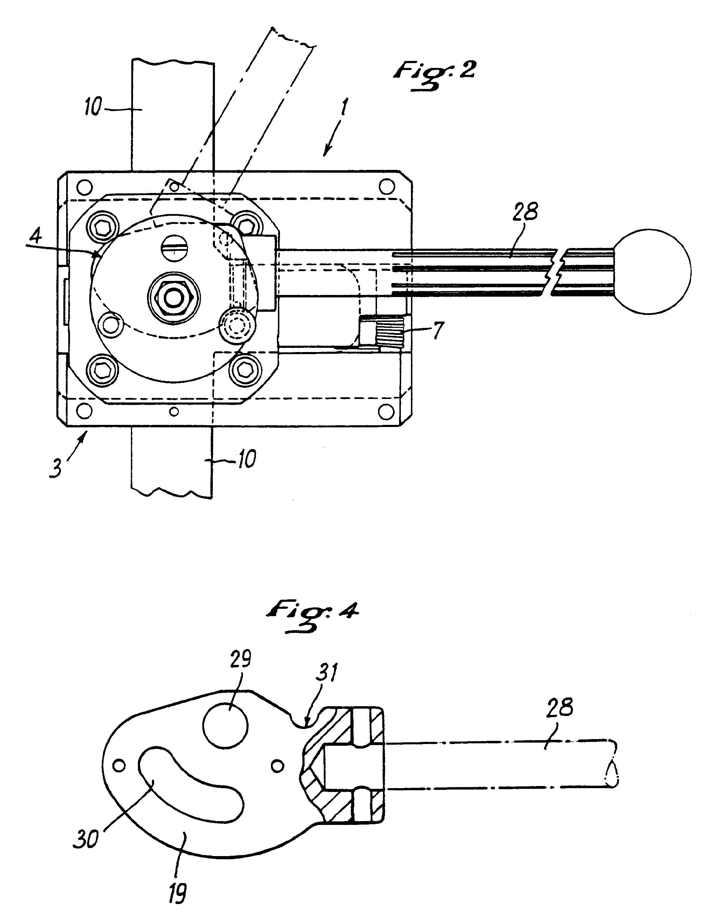

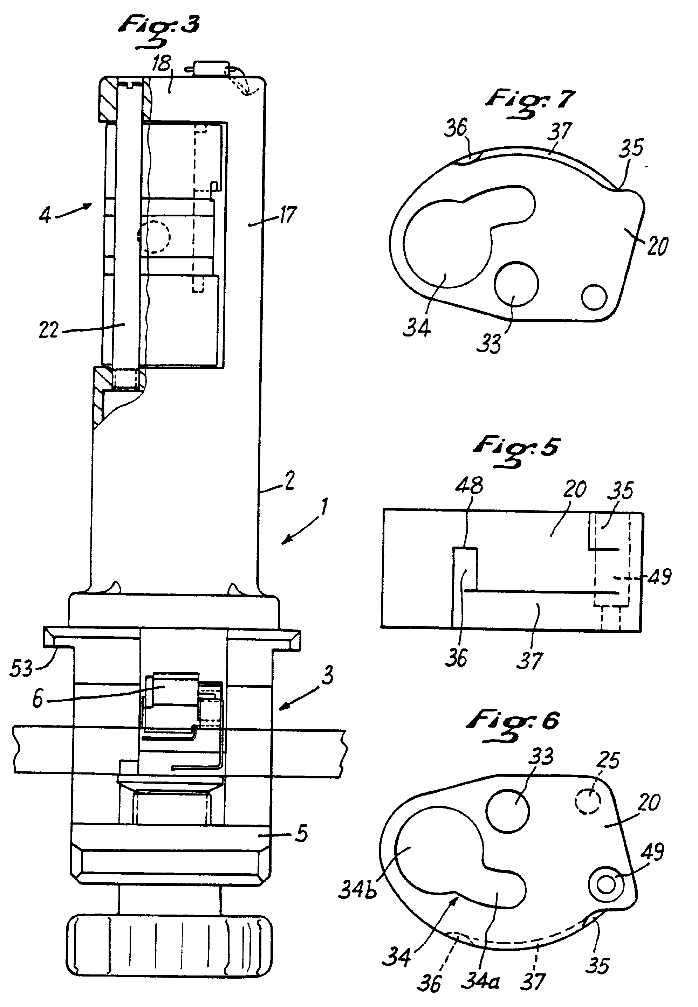

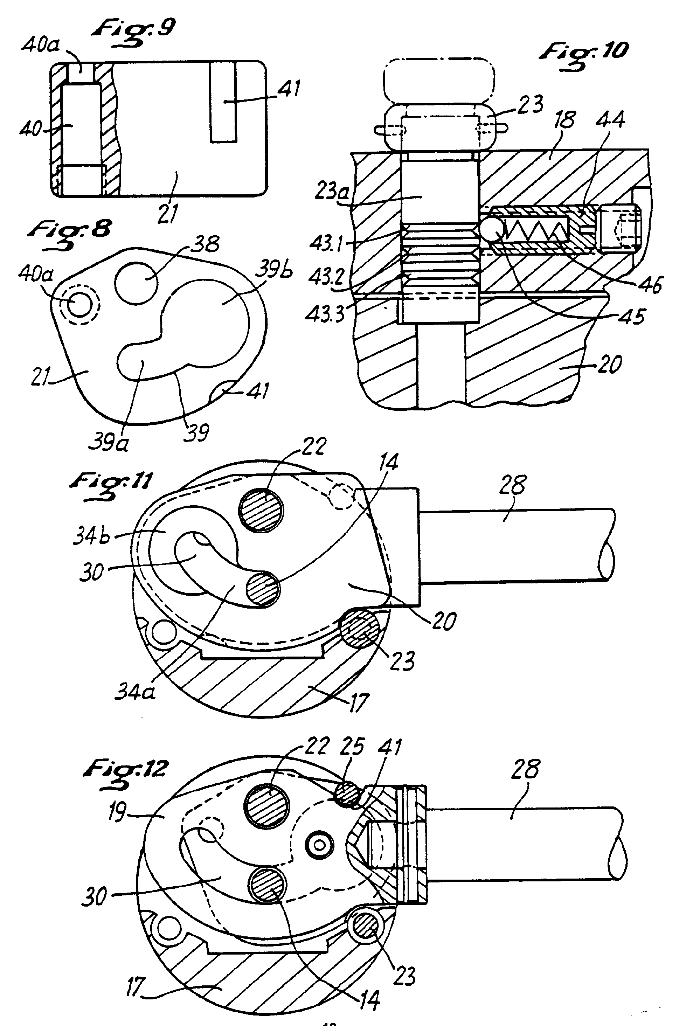

Le système 1 selon l'invention, montré par les figures 1 à 3, comporte un corps creux 2, prolongé rigidement à l'une de ses extrémités par une pince 3 et à son autre extrémité par un système de verrouillage 4.

La pince 3 comporte un mors fixe 5 et un mors articulé 6, pressé élastiquement à l'opposé dudit mors fixe 5 par un ressort 7. Une lame de ressort 8 est montée solidaire du mors articulé 6, en regard du mors fixe 5. Le mors fixe 5 comporte éventuellement un système d'enclume 9, réglable en position et pouvant s'adapter en orientation, pour servir d'appui à un élément 10 sur lequel doit être fixé le dispositif selon l'invention.

A l'intérieur du corps creux 2, sont prévus, à la manière de pistons, deux plateaux coulissants 11 et 12 entre lesquels est disposé un ressort 13, tendant à les écarter. Le plateau 11 est solidaire d'une tige 14, coaxiale au corps creux 2 et pouvant coulisser parallèlement à son axe. Une extrémité de ladite tige 14 est en appui sur le mors articulé 6. Le plateau 12 est solidaire d'une queue 15, coaxiale à la tige 14 qu'elle entoure. La queue 15 est montée pour pouvoir coulisser parallèlement à son axe, en traversant la paroi d'extrémité 16 du corps creux 2, opposée à la pince 3.

Un bras excentré 17 est solidaire de ladite paroi d'extrémité 16 du corps creux 2 et prolonge celui-ci à l'opposé de la pince 3. Ce bras 17 est terminé par un plateau 18, parallèle à la paroi d'extrémité 16 du corps creux 2. Le système de verrouillage 4 est agencé dans l'espace ménagé entre la paroi 16, le plateau 18 et le bras 17 et il comprend trois verrous juxtaposés 19, 20 et 21 en forme approximative de secteurs circulaires, traversés par la tige coulissante 14 et montés rotatifs autour d'un axe 22 excentré, ainsi qu'une goupille 23, à diamètre échelonné, traversant le plateau 18 et la paroi d'extrémité 16. La goupille 23 est solidaire d'une tirette 24, permettant de la coulisser parallèlement à elle-même. Cette goupille 23 est disposée à la périphérie des verrous rotatifs 19, 20 et 21 et coopère avec la partie circulaire de ladite périphérie (centrée sur l'axe 22) pour permettre on interdire sélectivement la rotation desdits verrous, comme cela sera expliqué plus en détail ci-après.

Un doigt de liaison permanente 25 rend les verrous 19 et 20 solidaires en rotation dans un sens.

Un doigt de liaison escamotable 26, pressé par un ressort 27, peut rendre solidaires en rotation, les verrous 19 et 21 dans l'autre sens.

Le verrou rotatif 19 est le verrou de commande et il est solidaire d'une poignée de manoeuvre 28. Comme le montre la figure 4, il est constitué d'une plaque épaisse en forme approximative de secteur, traversée par un trou 29 pour le passage de l'axe de rotation 22, et par une lumière oblongue et arquée 30 pour le passage de la tige coulissante 14. Son contour comporte une encoche 31, pour le logement du doigt 25 solidaire du verrou 20. Entre le verrou 19 et les verrous 20 et 21 sont prévues deux pièces d'usure, 19a et 19b respectivement, solidaires du verrou 19 et de section identique à celui-ci.

Le verrou rotatif 20 est destiné au contrôle de la position de la tige coulissante 14, dont la tête 32 est susceptible de s'appuyer sur ledit verrou, sous l'action du ressort 13. Comme le montrent les figures 5, 6 et 7, le verrou rotatif 20 est constitué par une plaque épaisse en forme approximative de secteur, traversée par un trou 33 pour le passage de l'axe de rotation 22 et par une lumière arquée 34 pour le passage de la tige 14. La lumière arquée 34 comporte une partie étroite 34a à travers laquelle la tête 32 ne peut pas passer et une partie élargie 34b, à travers laquelle la tête 32 peut passer. Par ailleurs, la périphérie du verrou 20 comporte une encoche supérieure 35, une encoche inférieure 36 et un dégagement d'épaisseur 37, destiné à coopérer avec la goupille 23.

Le verrou rotatif 21 est destiné au contrôle de la position de la queue coulissante 15, dont l'extrémité est susceptible de s'appuyer sur ledit verrou, sous l'action du ressort 13. Comme le montrent les figures 8 et 9, le verrou rotatif 21 est constitué par une plaque épaisse en forme approximative de secteur, traversée par un trou 38 pour le passage de l'axe de rotation 22 et par une lumière arquée 39 pour le passage de la tige 14. La lumière 39 comporte une partie étroite 39a à travers laquelle l'extrémité de la queue coulissante 15 ne peut pas passer et une partie élargie 39b, à travers laquelle l'extrémité de ladite queue peut passer. Le verrou rotatif 21 comporte de plus un logement 40 pour le système de doigt escamotable 26 et une encoche périphérique 41 coopérant avec la goupille 23. Le doigt escamotable 26 peut faire saillie à l'extérieur du verrou rotatif 21 à travers une ouverture 40a, débouchant dans le logement 40.

Comme le montre la figure 1, la goupille 23 comporte deux parties de grand diamètre 23a et 23b et deux parties de petit diamètre 23c et 23d, alternées. La partie de grand diamètre 23a, qui traverse le plateau 18, comporte trois gorges, respectivement 43.1, 43.2 et 43.3, susceptibles de coopérer alternativement avec un dispositif de marquage de position 44, du type comportant une bille 45 pressée par un ressort 46. La partie de grand diamètre 23b traverse le verrou 19, tandis que les parties de petit diamètre 23c et 23d traversent respectivement les verrous 20 et 21. L'extrémité de la partie de petit diamètre 23d est engagée dans un trou 47 de la paroi d'extrémité 16 du corps creux 2.

Sur les figures 1, 11 et 12, le système conforme à l'invention est représenté en position armée. Dans cette position armée :
   – le mors 6 est écarté du mors 5 par l'action du ressort 7 ;
   – la tige 14 est empêchée de coulisser sous l'action du ressort 13, grâce à l'appui de sa tête 32 sur le verrou 20, car alors la tige 14 se trouve dans la partie étroite 34a de la lumière 34 ;
   – la queue 15 est empêchée de coulisser sous l'action du ressort 13, grâce à l'appui de son extrémité sur le verrou 21, la tige 14 se trouvant alors dans la partie étroite 39a de la lumière 39 ;
   – la goupille 23 est dans sa position pour laquelle le système de marquage de position 44 coopère avec la gorge 43.1 (position représentée sur les figures 1 et 10). Dans cette position de la goupille 23 :
      . l'extrémité de la partie de grand diamètre 23a, saillant hors du plateau 18, coopère avec l'encoche 35 du verrou 20 pour empêcher celui-ci de tourner autour de l'axe 22 ;
      . l'extrémité de la partie de grand diamètre 23b, saillant hors du verrou 19, coopère avec l'encoche 41 du verrou 21 pour empêcher celui-ci de tourner autour dudit axe 22.

Par ailleurs, à cause du doigt de liaison permanente 25, le verrou 19 est également empêché de tourner.

Ainsi, tout déverrouillage intempestif du système 1 en position armée est interdit par la goupille 23.

Lorsque l'on veut fixer le dispositif 1 sur un élément 10, par exemple un barreau, on engage celui-ci entre les mors 5 et 6. L'écartement de ceux-ci permet une approche et un prépositionnement peu précis dudit dispositif par rapport audit élément 10.

Si, maintenant, on tire sur la goupille 23 par l'intermédiaire de la tirette 24, de façon que la bille 45 coopère avec la gorge 43.2 et non plus avec la gorge 43.1, la partie de grand diamètre 23a sort totalement de l'encoche 35 du verrou 20 et l'épaulement 47 séparant les parties 23b et 23c vient en appui contre le dégagement 37 dudit verrou 20, pour limiter l'amplitude du coulissement de ladite goupille. La partie 23b de la goupille 23 reste partiellement logée dans l'encoche 41 du verrou 21. Par suite, dans cette position, le verrou 19 n'est plus lié au corps 2, alors que le verrou 21 reste bloqué en rotation.

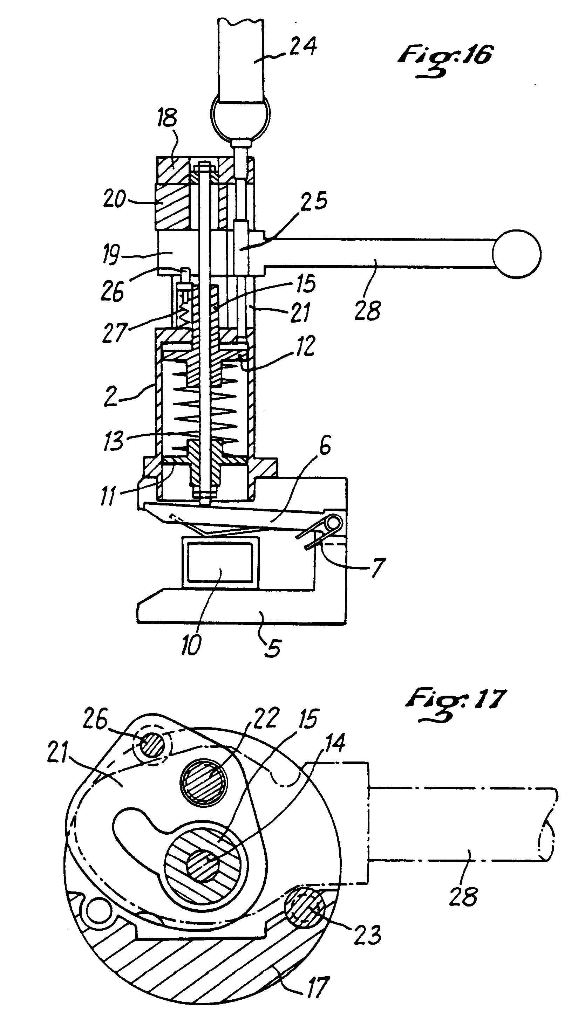

Une rotation de la poignée 28, dans le sens inverse des aiguilles d'une montre, permet donc de faire tourner le verrou 19 et le verrou 20 (liés par le doigt 25), jusqu'à amener la partie élargie 34b de la lumière 34 en regard de la tête 32 de la tige 14. Celle-ci peut donc se déplacer sous l'action du ressort 13 pour appliquer le mors articulé 6 contre l'élément 10, qui se trouve alors pressé entre lesdits mors 5 et 6. Cette situation est représentée sur la figure schématique 13, ainsi que sur les figures 14 et 15 qui correspondent respectivement à des coupes selon les lignes XI-XI et XV-XV de la figure 1, après rotation de la poignée 28. La position de fin de course est délimitée par la coopération de l'encoche 36 du verrou 20 avec la partie de grand diamètre 23b de la goupille 23.

Le doigt 26, qui jusqu'alors était repoussé dans le verrou 21 par la face correspondante du verrou 19, est libéré et, sous l'action du ressort 27, se place contre le verrou 19 (figure 4).

Si, maintenant, on exerce une nouvelle traction sur la goupille 23 pour amener la gorge 42.3 en regard de la bille 45, la partie de grand diamètre 23b sort totalement de l'encoche 41 du verrou 21, de sorte que celui-ci peut tourner autour de l'axe 22. La fin de course de la goupille 23 se fait alors par butée de l'épaulement 47 contre le fond 48 de l'encoche 36 du verrou 20 (voir la figure 5).

Par suite, si la poignée 28 est ramenée dans sa position initiale montrée par les figures 1, 11 et 12, le verrou 19 fait tourner le verrou 21, grâce à la liaison réalisée par le doigt 26. Cette rotation du verrou 21 amène la portion élargie 39b de la lumière 39 en regard de la queue 15, de sorte que celle-ci peut, sous l'action du ressort 13, pénétrer dans ledit verrou 21. Le ressort 13 se débande donc et l'élément 10 peut être dégagé de la pince 3. Cette situation est illustrée par la figure schématique 16, ainsi que par la figure 17, qui correspond à une coupe selon la ligne XV-XV de la figure 1, après aller et retour de la poignée 28.

On remarquera que dans cette position, la poignée 28 est libre de tourner autour de l'axe 22 dans le sens inverse des aiguilles d'une montre. Il peut donc être avantageux de prévoir, entre les verrous 19 et 20, un dispositif de liaison à doigt escamotable du type de celui portant les références 26 et 27. Un tel dispositif de liaison n'est pas représenté. Seul son logement 49 est indiqué sur les figures 5 et 6.

Sur la figure 18 on a représenté un équipement 50 devant être fixé sur deux barreaux parallèles 10 solidaires de la structure d'un vaisseau spatial. L'équipement 50 est porté par une plaque 51 percée d'ouvertures 52, à travers lesquelles passent des dispositifs de fixation 1. Ceux-ci s'appliquent contre la plaque 51, à la périphérie des ouvertures 52, grâce à des épaulements 53, prévus sur les corps 2-3 desdits dispositifs 1. De ce qui précède, on voit que l'équipement 50 peut être aisément rendu solidaire des barreaux 10, grâce aux systèmes 1.

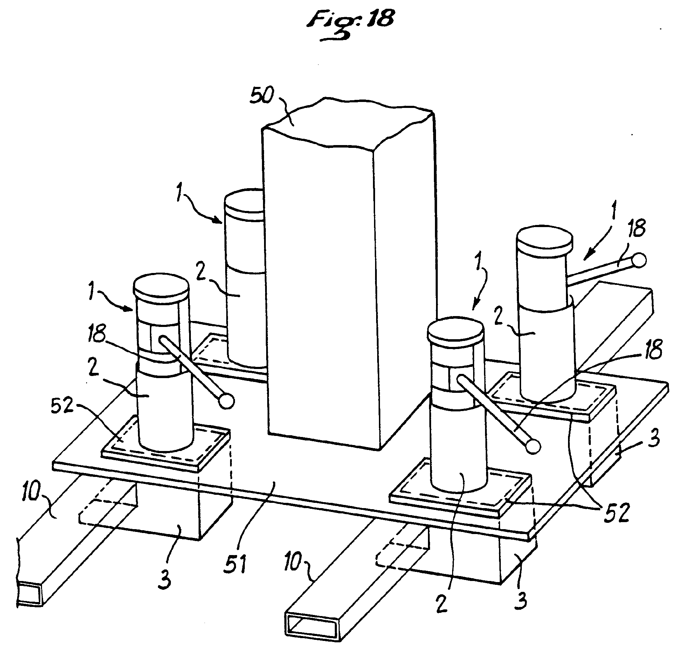

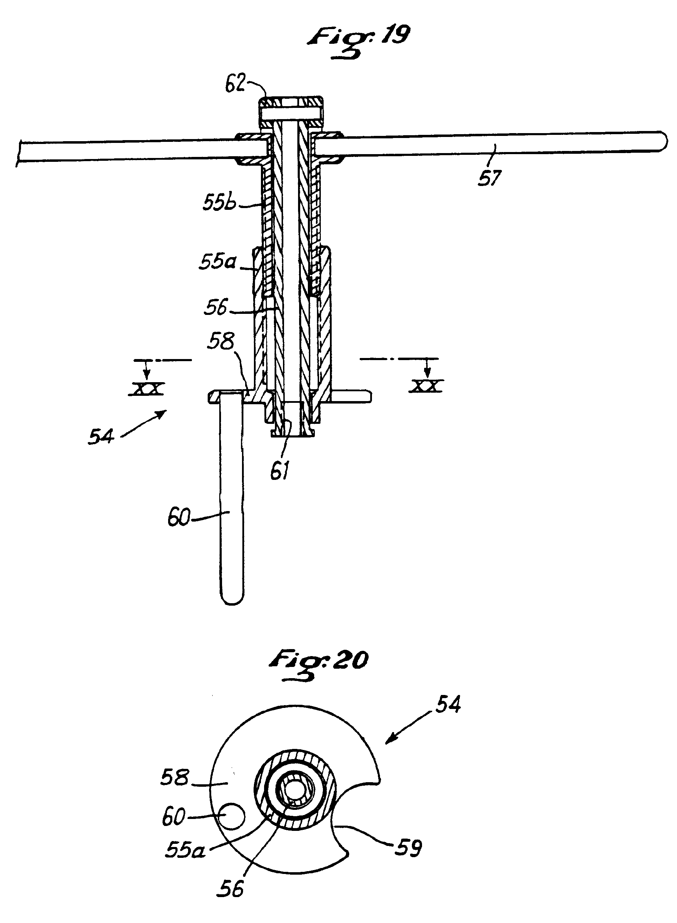

Lorsque le système 1 selon l'invention se trouve à l'état déverrouillé illustré par les figures 16 et 17, il est nécessaire de le ramener à l'état bandé, illustré par les figures 1, 11 et 12, avant une nouvelle utilisation. A cet effet, on peut avantageusement utiliser l'outillage 54 montré par les figures 19 et 20.

Cet outillage 54 comporte essentiellement un vérin à vis 55a, 55b et une douille 56, prisonnière de façon lâche dudit vérin, parallèlement à son axe longitudinal. L'une des parties 55b du vérin à vis est solidaire d'une poignée de manoeuvre 57, tandis que l'autre (55a) desdites parties du vérin est pourvue d'une face d'appui 58, pourvue d'une échancrure 59. Une tige 60 est solidaire de ladite face d'appui 58. La douille 56 est pourvue à l'une de ses extrémités d'un filetage femelle 61 et, à son autre extrémité, d'une tête de manoeuvre 62.

On se sert de l'outillage 54 de la façon suivante.

On fait pénétrer la tige 60 dudit outillage dans deux trous en regard, 63 et 64, respectivement pratiqués dans le plateau 18 et dans la face d'extrémité 16, de sorte que l'extrémité libre de ladite tige peut venir au contact du plateau 12, et être utilisée pour repousser ledit plateau, jusqu'à ce que la queue 15 sorte complétement de la partie élargie 39b de la lumière 39 traversant le verrou 21. Celui-ci peut alors être tourné dans le sens des aiguilles d'une montre, après avoir rétracté le doigt 26, en le pressant à l'encontre de l'action du ressort 27. Lorsque le verrou 21 est ramené dans sa position initiale de la figure 1, la goupille 23 est repoussée pour que la bille 45 passe de la gorge 43.3 à la gorge 43.2. Le verrou 21 est alors verrouillé dans cette position initiale.

La face d'appui 58 de l'outillage 54 ayant été disposée sur ledit plateau 18, de façon que la douille 56 se trouve en prolongement de la tige 14 (la tête de la goupille 23 se trouve alors dans l'échancrure 59), on peut faire tourner la tête de manoeuvre 62, pour visser le filetage femelle 61 de la douille 56 sur l'extrémité filetée 65 de la tige 14. On manoeuvre alors la poignée 57, pour que le vérin à vis 55a, 55b tire sur la tige 14, en prenant appui entre le plateau 18 et la tête de manoeuvre 62.

Lorsque la tête 32 est sortie du verrou 20, il est possible de ramener celui-ci dans sa position initiale par rotation dans le sens des aiguilles d'une montre. Dès que cette position initiale est atteinte, la goupille 23 est repoussée pour que la bille 45 passe de la gorge 43.2 à la gorge 43.1. A ce moment, le système selon l'invention est de nouveau dans son état initial, le ressort 13 étant bandé avec les verrous 19, 20, 21 bloqués et la pince 3 ouverte.

## Revendications

1 - Système de fixation, permettant notamment d'accoster rapidement une structure (10) pour y être fixé de façon détachable,
caractérisé en ce qu'il comporte
- une pince (3) spontanément ouvrable sous l'action d'un premier ressort (7) ;

– une tige (14) susceptible de coulisser sous l'action d'un second ressort (13) pour fermer ladite pince (3) à l'encontre de l'action dudit premier ressort (7) ;

– un appui mobile (15) pour ledit second ressort (13) ;

– des moyens de verrouillage commandables (19, 20, 21) pour le verrouillage de ladite tige coulissante (14) et dudit appui mobile (15), pouvant occuper trois positions, à savoir :

. une première position pour laquelle ladite tige (14) et ledit appui (15) sont verrouillés et ledit second ressort (13) est bandé ;

. une seconde position pour laquelle ladite tige (14) est déverrouillée, mais ledit appui (15) reste verrouillé ; et

. une troisième position pour laquelle ladite tige (14) et ledit appui (15) sont déverrouillés ;

– et des moyens (23) à commande volontaire pour le blocage desdits moyens de verrouillage, pouvant également occuper trois positions, à savoir :

. une première position pour laquelle lesdits moyens de verrouillage sont bloqués dans leur première position ;

. une seconde position pour laquelle lesdits moyens de verrouillage peuvent passer de leur première à leur seconde position ; et

. une troisième position pour laquelle lesdits moyens de verrouillage peuvent passer de leur seconde à leur troisième position.

2 - Système selon la revendication 1, caractérisé en ce que lesdits moyens de verrouillage comportent trois verrous (19, 20, 21) mobiles les uns par rapport aux autres, l'un (20) desdits verrous coopérant avec ladite tige mobile (14), tandis qu'un autre (21) coopère avec ledit appui mobile (15) et que le troisième (19) sert à la commande des deux autres, des moyens (25, 26) de solidarisation en déplacement étant prévus entre lesdits verrous.

3 - Système selon la revendication 2, caractérisé en ce que lesdits moyens de blocage sont formés par une goupille (23) coopérant avec lesdits verrous (19, 20, 21), lesdites seconde et troisième positions desdits moyens de blocage étant déterminées par butée de ladite goupille contre ledit verrou (19), servant à la commande des deux autres.

4 - Système selon l'une des revendications 2 ou 3, caractérisé en ce que lesdits verrous (19, 20, 21) sont montés rotatifs autour d'un axe commun (22) et présentent la forme au moins approximative d'un secteur de cercle, ladite goupille coopérant avec la partie circulaire desdits verrous.

5 - Système selon la revendication 4, caractérisé en ce que ladite goupille (23) présente un diamètre en échelon et en ce qu'elle est montée coulissante parallèlement à l'axe de rotation (22) desdits verrous.

6 - Système selon l'une quelconque des revendications 2 à 5, caractérisé en ce que lesdits verrous (20 et 21) coopérant respectivement avec ladite tige mobile (14) et ledit appui mobile (15) sont pourvus de lumières (34 et 39 respectivement) dans lesquelles peuvent pénétrer ladite tige (14) et ledit appui mobile (15).

7 - Système selon l'une quelconque des revendications 1 à 6, caractérisé en ce qu'il comporte un corps creux (2) formant cylindre et à l'intérieur duquel sont montés deux plateaux (11 et 12) formant pistons et respectivement solidaires de ladite tige (14) et dudit appui mobile (15), ledit second ressort (13) étant monté entre lesdits plateaux.

8 - Système selon l'une quelconque des revendications 1 à 7, caractérisé en ce qu'il comporte un système (44) pour le marquage de position desdits moyens de blocage (23).

9 - Système selon l'une quelconque des revendications 2 à 8, caractérisé en ce que lesdits verrous (19, 20, 21) et lesdits moyens (25, 26) de solidarisation en déplacement desdits verrous sont prévus pour que la fermeture et l'ouverture de ladite pince soient obtenues par des déplacements inverses dudit troisième verrou de commande (19).

10 - Système selon l'une quelconque des revendications 1 à 9, caractérisé :

– en ce que, dans leur troisième position, lesdits moyens de blocage (23) permettent auxdits moyens de verrouillage (19, 20, 21) de passer de leur troisième à leur seconde position par action volontaire sur ledit appui (15) ;

– et en ce que, dans leur seconde position, lesdits moyens de blocage (23) permettent auxdits moyens de verrouillage (19, 20, 21) de passer de leur seconde à leur première position par action volontaire sur ledit second ressort (13).

**Patentansprüche**

1. - Befestigungsvorrichtung zum schnellen Andocken und Lösen einer Struktur (10), dadurch gekennzeichnet, daß sie

– eine Klemme (3), welche sich unter der Wirkung einer ersten Feder (7) von selbst öffnet;

– eine Stange (14), welche geeignet ist, sich unter der Wirkung einer zweiten Feder (13) zu verschieben, um die genannte Klemme (3) entgegen der Wirkung der genannten ersten Feder (7) zu schließen;

– ein bewegliches Auflager (15) für die genannte zweite Feder (13);

– steuerbare Verriegelungsmittel (19, 20, 21) für die Verriegelung der genannten verschiebbaren Stange (14) und des genannten beweglichen Auflagers (15), welche drei Stellungen einnehmen können, nämlich:

. eine erste Stellung, in welcher die genannte Stange (14) und das genannte Auflager (15) verriegelt sind und die genannte zweite Feder (13) gespannt ist;

. eine zweite Stellung, in welcher die genannte Stange (14) entriegelt ist, aber das genannte Auflager (15) verriegelt bleibt; und

. eine dritte Stellung, in welcher die genannte Stange (14) und das genannte Auflager (15) entriegelt sind;

– und willentlich steuerbare Mittel (23) zum Blockieren der genannten Verriegelungsmittel umfaßt, welche Mittel (23) ebenfalls drei Stellungen einnehmen können, nämlich:

. eine erste Stellung, in welcher die genannten Verriegelungsmittel in ihrer ersten Stellung blockiert werden;

. eine zweite Stellung, in welcher die genannten Verriegelungsmittel aus ihrer ersten in ihre zweite Stellung übergehen können; und

. eine dritte Stellung, in welcher die genannten Verriegelungsmittel von ihrer zweiten in ihre dritte Stellung übergehen können.

2. - Vorrichtung gemäß Anspruch 1, dadurch gekennzeichnet, daß die genannten Verriegelungsmittel drei gegeneinander bewegliche Riegel (19, 20, 21) umfassen, wobei der eine (20) der genannten Riegel mit der genannten beweglichen Stange (14) zusammenwirkt, während ein weiterer Riegel (21) mit dem genannten beweglichen Auflager (15) zusammenwirkt, und der dritte Riegel (19) der Steuerung der beiden anderen Riegel dient, während zwischen den genannten Riegeln Mittel (25, 26) für ihre formschlüssige Verbindung beim Bewegen vorgesehen sind.

3. - Vorrichtung gemäß Anspruch 2, dadurch gekennzeichnet, daß die genannten Blockierungsmittel aus einem Stift (23) bestehen, welcher mit den genannten Riegeln (19, 20, 21) zusammenwirkt, wobei die genannte zweite Stellung und die genannte dritte Stellung der genannten Blockierungsmittel durch den Anschlag des genannten Stiftes an dem genannten Riegel (19), welcher der Steuerung der beiden anderen Riegel dient, bestimmt wird.

4. - Vorrichtung gemäß Anspruch 2 oder Anspruch 3, dadurch gekennzeichnet, daß die genannten Riegel (19, 20, 21) um eine gemeinsame Achse (22) herum drehbar angeordnet sind und zumindest annähernd Kreissektorform aufweisen, wobei der genannte Stift mit dem kreisförmigen Teil der genannten Riegel zusammenwirkt.

5. - Vorrichtung gemäß Anspruch 4, dadurch gekennzeichnet, daß sich der Durchmesser des genannten Stiftes (23) stufenweise ändert und daß der genannte Stift (23) so angeordnet ist, daß er parallel zur Drehachse (22) der genannten Riegel verschiebbar ist.

6. - Vorrichtung gemäß einem der Ansprüche 2 bis 5, dadurch gekennzeichnet, daß die genannten Riegel (20 und 21), welche mit der genannten beweglichen Stange (14) bzw. mit dem genannten beweglichen Auflager (15) zusammenwirken, Öffnungen (34 bzw. 39) aufweisen, in welche die genannte Stange (14) bzw. das genannte bewegliche Auflager (15) eindringen kann.

7. - Vorrichtung gemäß einem der Ansprüche 1 bis 6, dadurch gekennzeichnet, daß sie einen Hohlkörper (2) umfaßt, welcher einen Zylinder bildet, in dessen Innerem zwei Scheiben (11 und 12) angeordnet sind, welche Kolben bilden und mit der genannten Stange (14) bzw. dem genannten beweglichen Auflager (15) fest verbunden sind, wobei die genannte zweite Feder (13) zwischen den genannten Scheiben angeordnet ist.

8. - Vorrichtung gemäß einem der Ansprüche 1 bis 7, dadurch gekennzeichnet, daß sie eine Vorrichtung (44) für die Kennzeichnung der Stellung der genannten Blockierungsmittel (23) umfaßt.

9. - Vorrichtung gemäß einem der Ansprüche 2 bis 8, dadurch gekennzeichnet, daß die genannten Riegel (19, 20, 21) und die genannten Mittel (25, 26) zur formschlüssigen Verbindung bei Bewegen der genannten Riegel so eingerichtet sind, daß das Schließen und das Öffnen der genannten Klemme durch einander entgegengerichtete Bewegungen des genannten dritten, der Steuerung dienenden Riegels (19) erreicht werden.

10. - Vorrichtung gemäß einem der Ansprüche 1 bis 9, dadurch gekennzeichnet,

– daß die genannten Blockierungsmittel (23) in ihrer dritten Stellung den genannten Verriegelungsmitteln (19, 20, 21) gestatten, durch willentliche Einwirkung auf das genannte Auflager (15) aus ihrer dritten Stellung in ihre zweite Stellung überzugehen; und

– daß die genannten Blockierungsmittel (23) in ihrer zweiten Stellung den genannten Verriegelungsmitteln (19, 20, 21) gestatten, durch willentliche Einwirkung auf die genannte zweite Feder (13) aus ihrer zweiten Stellung in ihre erste Stellung überzugehen.

## Claims

1. Fastening system, in particular for rapidly docking a structure (10) thereto in a detachable manner, characterised in that it comprises

   – a grip (3) spontaneously openable under the action of a first spring (7);

   – a rod (14) capable of sliding under the action of a second spring (13) in order to close said grip (3) against the action of said first spring (7);

   – a movable support (15) for said second spring (13):

   – controllable locking means (19, 20, 21) for the locking of said sliding rod (14) and of said movable support (15), capable of occupying three positions, namely :

     . a first position for which said rod (14) and said support (15) are locked and said second spring (13) is loaded;

     . a second position for which said rod (14) is unlocked, but said support (15) remains locked; and

     . a third position for which said rod (14) and said support (15) are unlocked;

   – and deliberately controllable means (23) for the blocking of said locking means, also capable of occupying three positions, namely :

     . a first position for which said locking means are blocked in their first position;

     . a second position for which said locking means can pass from their first to their second position; and

     . a third position for which said locking means can pass from their second to their third position.

2. System according to Claim 1, characterised in that said locking means comprise three locks (19, 20, 21) movable with respect to one another, one (20) of said locks co-operating with said movable rod (14), whereas another (21) co-operates with said movable support (15) and whereas the third (19) serves for the control of the other two, means (25, 26) for securing one to another in displacement being provided between said locks.

3. System according to Claim 2, characterised in that said blocking means are formed by a pin (23) cooperating with said locks (19, 20, 21), said second and third positions of said blocking means being determined by stopping of said pin against said lock (19), serving for the control of the other two.

4. System according to one of Claims 2 or 3, characterised in that said locks (19, 20, 21) are mounted so as to rotate about a common spindle (22) and have at least the approximate shape of a sector of a circle, said pin co-operating with the circular part of said locks.

5. System according to Claim 4, characterised in that said pin (23) has a stepped diameter and in that it is slidably mounted parallel with the spindle (22) for rotation of said locks.

6. System according to any one of Claims 2 to 5, characterised in that said locks (20 and 21) co-operating respectively with said movable rod (14) and said movable support (15) are provided with openings (34 and 39 respectively) into which can enter said rod (14) and said movable support (15).

7. System according to any one of Claims 1 to 6, characterised in that it comprises a hollow body (2) forming a cylinder and inside which are mounted two piston-forming plates (11 and 12) securely attached to said rod (14) and to said movable support (15) respectively, said second spring (13) being mounted between said plates.

8. System according to any one of Claims 1 to 7, characterised in that it comprises a system (44) for marking the position of said blocking means (23).

9. System according to any one of Claims 2 to 8, characterised in that said locks (19, 20, 21) and said means (25, 26) for securing said locks to one another in displacement are provided so that the closure and the opening of said grip are obtained by opposite displacements of said third control lock (19).

10. System according to any one of Claims 1 to 9, characterised :

   – in that, in their third position, said blocking means (23) permit said locking means (19, 20, 21) to pass from their third to their second position by deliberate action on said support (15);

   – and in that, in their second position, said blocking means (23) permit said locking means (19, 20, 21) to pass from their second to their first position by deliberate action on said second spring (13).

Fig:1

*Fig. 2*

10

1

4

3

10

28

7

*Fig. 4*

29

31

28

30

19

EP 0 354 107 B1

*Fig:3*

18

4

17

22

2

1

53

6

3

5

*Fig:7*

36   37   35

20

34   33

*Fig:5*

48   20   35

49

36   37

*Fig:6*

33   25

20

49

34b

34   34a   37   35

36

11

Fig. 9

40a

41

40

21

Fig. 10

23

23a

18    44

43.1

43.2

46

43.3

45

20

Fig. 8

38

39b

40a

21

39a    39

41

Fig. 11

22

14

28

34b

30

20

34a

23

17

Fig. 12

22  25  41

28

19

30

23

17

14

12

Fig.13

Fig.14

Fig.15

Fig. 16

24
18
20
25
19
26
15
27
21
28
2
12
13
6
11
7
10
5

Fig. 17

26
22
15
21
14
28
23
17

Fig. 18

Fig. 19

Fig. 20